# EUROPÄISCHE PATENTSCHRIFT

(11) **EP 0 861 389 B1**
(45) Veröffentlichungstag und Bekanntmachung des Hinweises auf die Patenterteilung: **23.02.2000**
(21) Anmeldenummer: 96945880.1
(22) Anmeldetag: 12.11.1996
(51) Int. Cl.: F16H 25/24

(54) **VORRICHTUNG ZUR UMWANDLUNG EINER DREHBEWEGUNG IN EINE AXIALBEWEGUNG**
DEVICE FOR CONVERTING A ROTARY MOTION INTO AN AXIAL MOTION
DISPOSITIF POUR TRANSFORMER UN MOUVEMENT DE ROTATION EN UN MOUVEMENT AXIAL

(30) Priorität: 14.11.1995 DE 19542453
(43) Veröffentlichungstag der Anmeldung: 02.09.1998
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: DE9602170
(87) Internationale Veröffentlichungsnummer: WO9718406

(56) Entgegenhaltungen:
- CH-A- 290 685
- US-A- 2 966 070
- US-A- 4 802 558
- US-A- 5 035 120

## Beschreibung

Die Erfindung betrifft eine Vorrichtung zur Umwandlung einer Drehbewegung in eine Axialbewegung nach dem Oberbegriff des Anspruches 1.

Eine derartige Vorrichtung ist z.B. aus der CH 290 685 im Sinne eines Planeten-Wälz-Gewindespindelantriebs bekannt. Mit einer rohrförmigen Mutter wirken gegenüber der Mutter im wesentlichen axial unverschieblich Planeten wälzend zusammen, in die eine innen liegende Gewindespindel eintaucht. Diese Vorrichtung zur Umwandlung einer Drehbewegung in eine Axialbewegung arbeitet aufgrund des Abwälzens der Planeten als Rollkörper zwar sehr effektiv und langlebig, da keine Gewindegänge oder Profilierungen außen liegend angeordnet sind. Eine Verschmutzung läßt sich vermeiden, so daß die Lebensdauer des gesamten Antriebs erhöht wird. Die Verwendung des Rohrs gegenüber einer Vollspindel reduziert die zu bewegenden Massen. Die Bewegung erfolgt im wesentlichen im Innern des Rohres, so daß das Rohr selbst einen Schutz der relativ zueinander bewegten Teile bildet. Allerdings wird diese Schutzfunktion dadurch beeinträchtigt, daß die die Gewindespindel tragende Stange im Dichtungsbereich gegenüber der rohrförmigen Mutter rotiert, so daß nicht nur die Dichtung einem zusätzlichen Verschleiß unterworfen ist, sondern auch Schmutzteile zumindest langfristig nicht zuverlässig vom Innenraum ferngehalten werden können (Ebenso DE-AS 1 043 743).

Aus der US-A 4,802,558 und der US-A 5,035,120 sind Kugelrollspindelantriebe bekannt, bei denen mittig eine Spindel rotiert, die von einer Kugelrollmutter umgeben ist. Die zwischen Spindel und Mutter angeordneten Rollkörper werden gemeinsam mit der Kugelrollmutter in axialer Richtung bewegt. Der Antrieb ist zudem von rohrförmigen Elementen im Übertragungsbereich zwischen Spindel und Kugelrollmutter zum Teil dichtend umschlossen. Da die translatorische Bewegung im wesentlichen von der Spindel auf die Kugelrollmutter übetragen wird, werden die translatorischen Kräfte im innen liegenden und damit ungünstigeren Bereich übertragen. Eine Auskopplung der Antriebselemente bei der Kraftübertragung findet nicht statt, vielmehr hat das außen liegende Rohr lediglich Schutzfunktion, ohne daß eine Kraftübertragung über diesem Bereich stattfindet. Damit muß die Spindel immer noch für die Übertragung der Gesamtkräfte bemessen werden.

Aus dem US-A 2,966,070 ist eine Anordnung bekannt, bei der Planeten als Wälzkörper vorgesehen sind. Diese Wälzkörper werden gegenüber einer innen liegenden Gewindespindel axial verschoben und bewegen dabei ein mit einer Innenprofilierung versehenes Rohr in axialer Richtung. Eine axiale Verschiebung zwischen dem Rohr und den Wälzkörpern findet nicht statt. Das Rohr ist außenseitig von einem rohrförmigen Element umgeben, das jedoch nicht dazu bestimmt ist, Axialkräfte hierüber zu übertragen. Die Kraftübertragung findet vielmehr vom Rohr über die Wälzkörper auf die Spindel statt.

Aus der DE-A 44 07 537 ist der Einsatz von Wälzkörpern mit unterschiedlichen Profilen bekannt, die je für sich in die Innenprofilierung der rohrförmigen Mutter oder in die Außenprofilierung der Spindel eingreifen.

Aus der AT-E 50 843 ist es bekannt, die Wälzkörper gegen die Kraft elastischer Elemente in axialer Richtung stoßsicher zu lagern. Es ist jedoch nicht beabsichtigt unter Einsatz dieser elastischen Elemente den Antrieb aus dem Kraftfluß auszukoppeln.

Ausgehend von diesem Stand der Technik liegt der vorliegenden Erfindung die Aufgabe zugrunde, eine Vorrichtung zur Umwandlung einer Drehbewegung in eine Axialbewegung der eingangs genannten Gattung derart weiterzubilden, daß auf einfachste Weise ein Schutz vor äusseren Einflüssen gewährleistet ist.

Diese Aufgabe wird durch die Merkmale des Anspruches 1 gelöst.

Äußerlich ergibt sich das Bild einer Kolbenstange, die in einen Zylinder eintaucht, da aufgrund der translatorischen Bewegung zwischen Rohr und die Stange koaxial umschließendem, rohrförmigem Element keine Rotation mehr sichtbar ist. Damit wird die bauliche Voraussetzung für eine Abdichtung auf einer glatten Fläche ohne Rotation zwischen den gegeneinander abzudichtenden Teilen geschaffen, so daß der Schutz des mechanischen Antriebs vor Verschmutzungen erhöht ist. Wird der Innenraum des Rohres auf der der Dichtung gegenüberliegenden Seite verschlossen, so kann zuverlässig und gegenüber bekannten Antrieben auch über lange Zeit hinweg eine Ölschmierung aufgebracht werden, die Wirkungsgrad und Lebensdauer der Vorrichtung erhöht. Gleichzeitig wird der Antrieb leiser und durch das Ölvolumen im Innenraum bedarfsweise gekühlt. Aber auch der Stangendurchmesser kann an seine jeweilige Aufgabe angepaßt werden, da die Stange nicht mehr zugleich die Dichtungsfunktion erfüllen muß. Bei Überschreiten einer vorbestimmten Axialkraft können die aufgebrachten statischen Kräfte über das stabilere rohrförmige Element geführt werden. Damit kann die Stange auf ihren eigentlichen Zweck, nämlich auf die Übertragung der Rotationskräfte bemessen werden, was zu einer Reduzierung der zu bewegenden Massen beiträgt.

### Kurzbeschreibung der Figuren

- Fig. 1: einen Schnitt durch eine Vorrichtung mit identischen Wälzkörpern,
- Fig. 1a, 1b: Schnitte durch die Darstellung gemäß Fig. 1 nach den Linien 1a-1a bzw. 1b-1b,

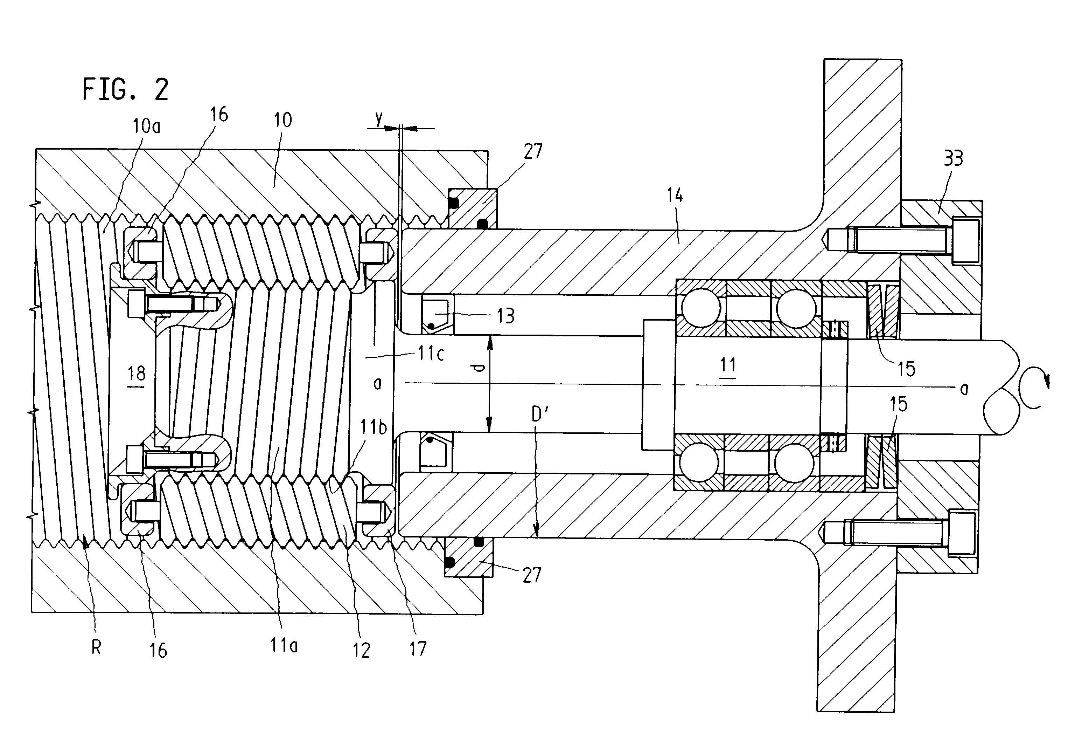

- Fig. 2: einen vergrößerten Ausschnitt im Bereich eines Kopfs der Stange in einem zweiten Ausführungsbeispiel ohne Zwangsführung,
- Fig. 3: ein drittes Ausführungsbeispiel in einer Darstellung gemäß Fig. 1, wobei die Wälzkörper unterschiedliche Profilierungen aufweisen,
- Fig. 4: einen Schnitt durch eine Vorrichtung gemäß Fig. 1 in einem Ausführungsbeispiel, bei dem Kugeln als Rollkörper verwendet werden,
- Fig. 5: einen Schnitt durch einen Hohlwellenmotor,
- Fig. 6: eine Draufsicht auf einen Teil einer Kunststoff-Spritzgießmaschine,
- Fig. 7: eine teilweise geschnittene Draufsicht auf eine Schließeinheit einer Kunststoff-Spritzgießmaschine in einer weiteren Ausführungsform,
- Fig. 8: eine Darstellung gemäß Fig. 2 in einer weiteren Ausführungsform.

Die Erfindung wird jetzt beispielhaft unter bezug auf die beigefügten Zeichnungen näher erläutert. Allerdings handelt es sich bei den Ausführungsbeispielen lediglich um Beispiele, die nicht das erfinderische Konzept auf eine bestimmte physikalische Anordnung beschränken sollen.

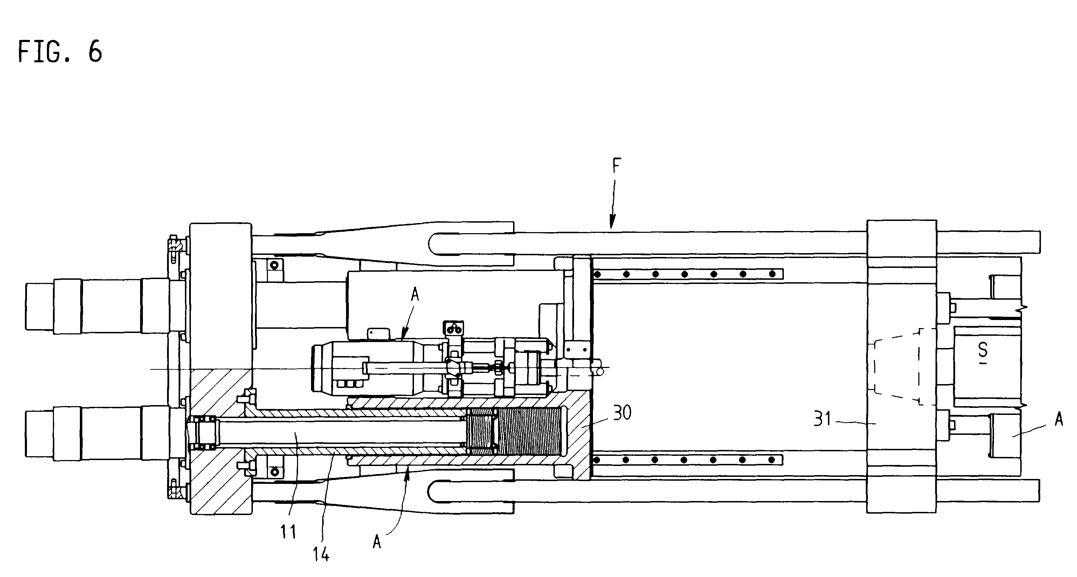

Die Ausführungsbeispiele zeigen verschiedene Vorrichtungen zur Umwandlung einer Drehbewegung in eine Axialbewegung, wie sie vielfach im Bereich elektromechanischer Antriebe erforderlich ist, um die Drehbewegung des Motors in eine translatorische Bewegung zu überführen. Für derartige Vorrichtungen gibt es vielerlei Einsatzbereiche. So kann die Vorrichtung z.B. gemäß Fig. 6 an einer Kunststoff-Spritzgießmaschine als Antriebseinheit A eingesetzt werden. Als Antriebseinheiten kommen sowohl die formschließseitigen als auch die spritzgießseitigen Antriebseinheiten, Auswerfer und dergleichen in Betracht. Zum Beispiel wird durch den in Fig. 6 links unten dargestellten Antrieb der bewegliche Formträger 30 auf den stationären Formträger 31 zu bewegt und von der Formschließeinheit F dann die Schließkraft aufgebracht, so daß beim Vorhandensein einer zeichnerisch nicht dargestellten Gießform von der Spritzgießeinheit S in diese Gießform plastifiziertes Material eingespritzt werden kann.

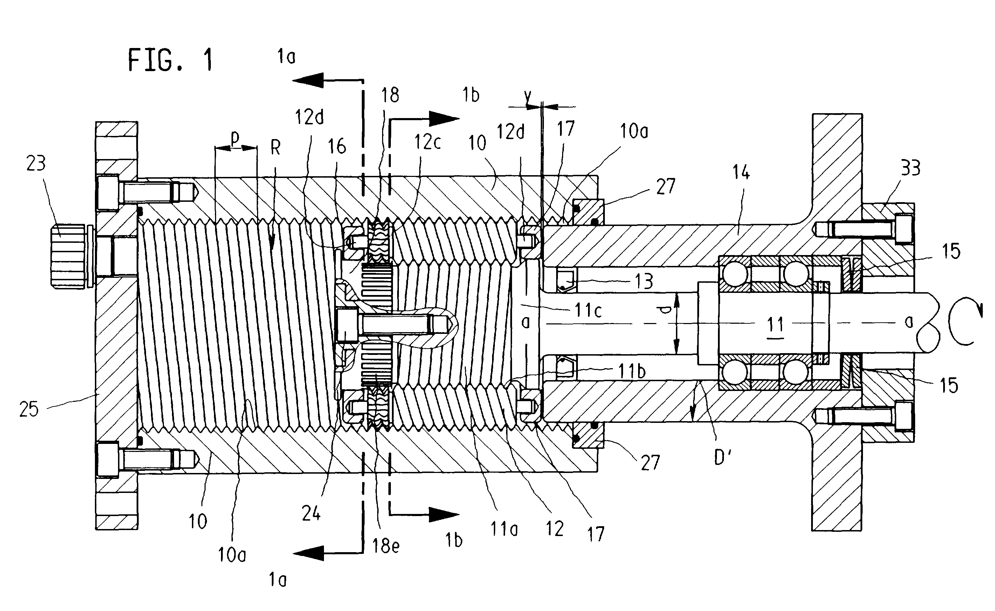

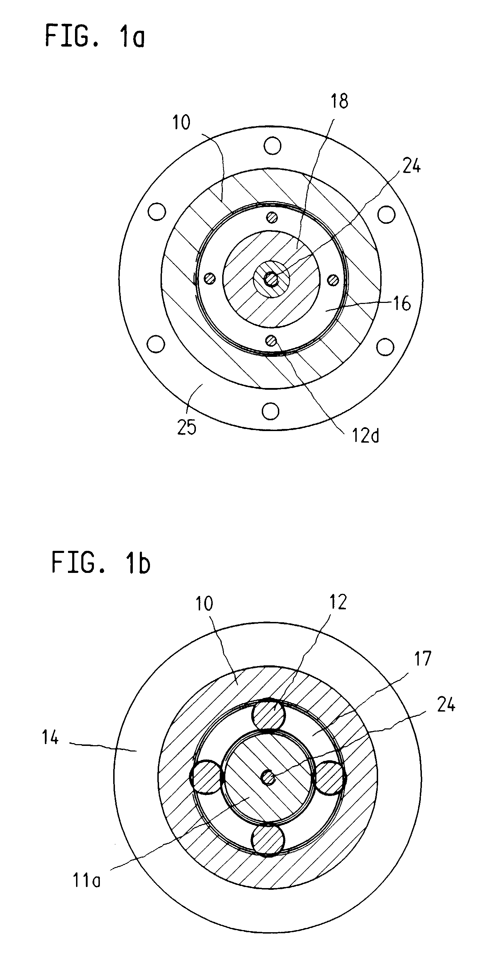

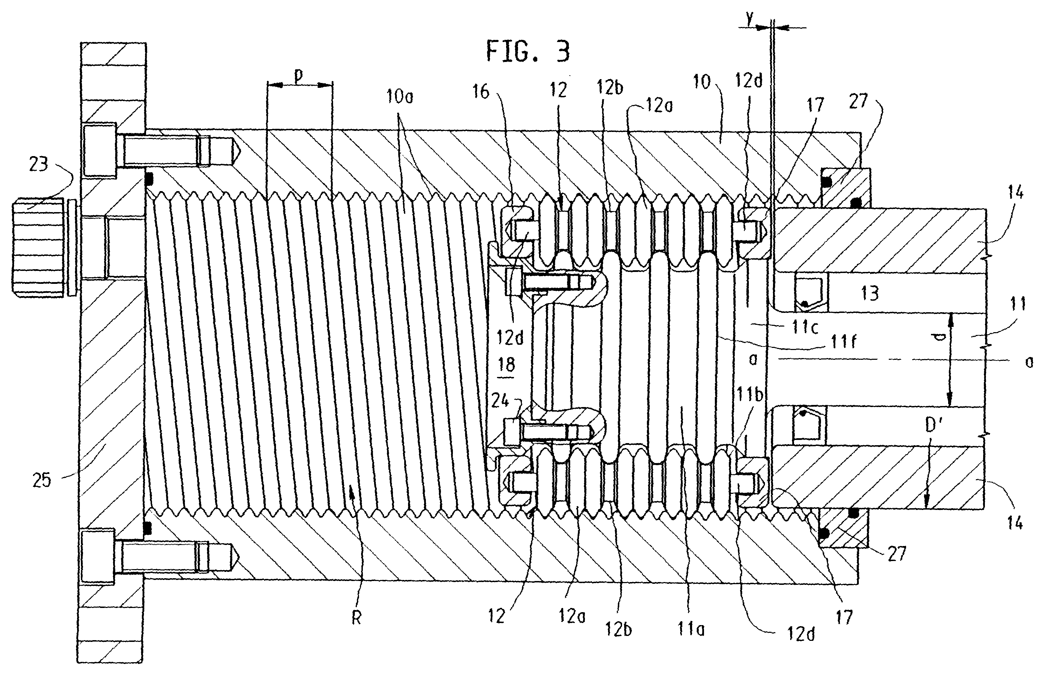

Eine derartige Vorrichtung umfaßt gemäß Fig. 1 ein außen liegendes Rohr 10 mit Innenprofilierung 10a, eine innen liegende Stange 11 mit Kopf 11a mit Außenprofilierung 11b und mehrere im Innenraum R zwischen Rohr 10 und Stange 11, um den Kopf 11a herum angeordnete, Rollkörper 12 mit wenigstens einer Profilierung, die zur Innenprofilierung 10a und zur Außenprofilierung 11b oder beim Ausführungsbeispiel der Fig. 3 zu den beiden verschiedenen Profilierungen paßt. Dabei sind verschiedene Abstimmungen der Profilierungen zueinander möglich, so daß sich ideelle Gewindesteigungen in beliebiger Art und Weise realisieren lassen, die letztlich auch zu einer nicht mehr vorhandenen Axialbewegung führen können. Erfolgt hier eine Rotationsbewegung des einen Teils, so erfolgt lediglich eine entsprechend übersetzte Rotationsbewegung des anderen Teils mit einer geänderten Drehzahl. Ebenso kann die umzuwandelnde Drehbewegung sowohl über das Rohr 10 als auch über die Stange 11 eingeleitet werden.

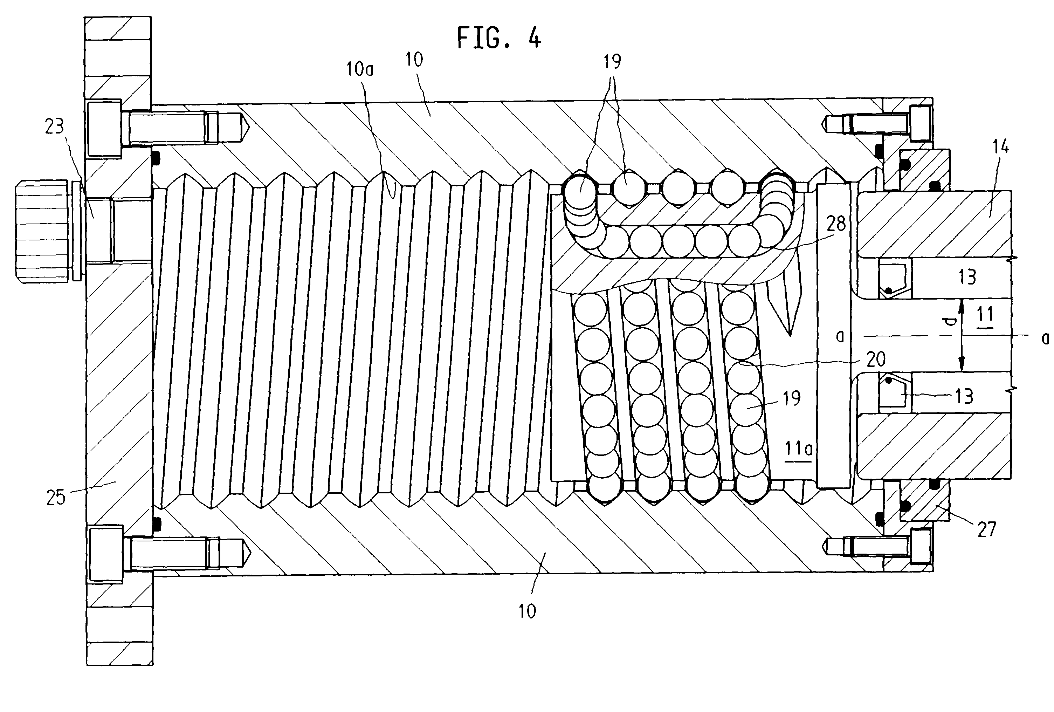

Der Kopf 11a der Stange 11 ist im wesentlichen gegenüber den Rollkörpern 12 rotatorisch lageveränderbar. Eine Axialbewegung zwischen dem Kopf 11a der Stange 11 und den Rollkörpern 12 wird weitestgehend vermieden, wenn man von Spiel absieht oder von der Axialbewegung der Kugeln im Ausführungsbeispiel der Fig. 4 in der Bohrung 28. Insofern bildet die Stange 11 mit den Rollkörpern 12 eine sich gemeinsam relativ zum Rohr 10 bewegende Einheit.

In den Fign. 1a und 1b ist der grundsätzliche Aufbau erläutert. Im Rohr 10 ist der Innenraum R auf der einen Seite durch die Stange 11 und auf der anderen Seite durch eine Abdeckung 25 verschlossen. Über eine Entlüftung 23 kann dieser Innenraum R bei Bewegung der Stange 11 entlüftet werden. Dieser Innenraum R läßt sich so verschließen, daß darin eine ölschmierung eingebracht werden kann, so daß eine leichtere Bewegung der im Innenraum R geschützten Teile möglich ist bei gleichzeitiger Schalldämpfung und Kühlung. Der Innenraum R muß nicht vollständig mit Öl gefüllt sein, um diesen Effekt zu erhalten. Es genügt nur eine Teilfüllung, wobei ein Luftaustausch über die Entlüftung 23 vorgesehen wird. Um das Eindringen von Schmutz zu verhindern, kann in die Entlüftung 23 ein Filter eingebaut werden. Bei einer vollständigen Füllung hingegen muß ein Ausgleichsraum für bei der Bewegung verdrängtes Volumen vorgesehen werden. Wenngleich das Öl in diesem Fall auch in einem Kreislauf gepumpt werden kann, kann für die Kühlung auch die bloße Bewegung des Öls ggf. über einen zusätzlichen Kühler allein infolge der Betätigung der Vorrichtung ausreichend sein.

Fign. 1a, 1b verdeutlichen auch, daß eine Lagerung der Wälzkörper erfolgt. Hierzu ist am Kopf 11a eine Scheibe 18 befestigt, die der Lagerscheibe 16 der Rollkörper 12 als Axialführung dient. In die Lagerscheibe 16 tauchen Lagerstifte 12d der Rollkörper 12 ein. Am gegenüberliegenden Ende sind die Wälzstifte 12d in einer weiteren Lagerscheibe 17 gelagert, die sich um den Hals 11c dreht. Die Scheibe 18 wird über Befestigungsmittel 24 mit dem Kopf 11a verbunden.

Grundsätzlich wird angestrebt, sämtliche Rollkörper 12 identisch auszubilden. Hier besteht zunächst die Möglichkeit, das Innenprofil 10a in mehreren Gängen innerhalb der Steigung p auszubilden und eine entsprechende Anzahl identischer Rollkörper 12 als Planeten vorzusehen. In Fig. 1 werden bei einem viergängigen Gewinde vier Planeten vorgesehen. Die Rollkörper 12 können voneinander in zeichnerisch nicht dargestellter Weise durch auf ihrer Umlaufbahn angeordnete Distanzelemente getrennt sein. Diese ersetzen die sonst erforderliche Lagerung über die Lagerscheiben 16,17.

Die Stange 11 selbst hat einen kleinen Durchmesser d. Sie ist koaxial umgeben von einem rohrförmigen Element 14, das z.B. an einer Aufnahme 33 angeflanscht ist. Der Außendurchmesser D' des rohrförmigen Elements entspricht fast oder nahezu dem Innendurchmesser der Profilierung 10a des Rohres 10. Eine Abdichtung des Innenraums R kann durch die Dichtung 27 zwischen dem Rohr 10 und dem rohrförmigen Element 14 erfolgen, wobei bei rotierender Stange 11 sich äußerlich die Erscheinung einer in einen Zylinder eintauchenden Kolbenstange ergibt, da beide Elemente nur eine translatorische Bewegung zueinander ausführen. Dies erleichtert auch die Abdichtung des Innenraums R, so daß eine schalldämpfende und kühlende Ölschmierung zuverlässig auch für längere Zeit dort eingebracht werden kann.

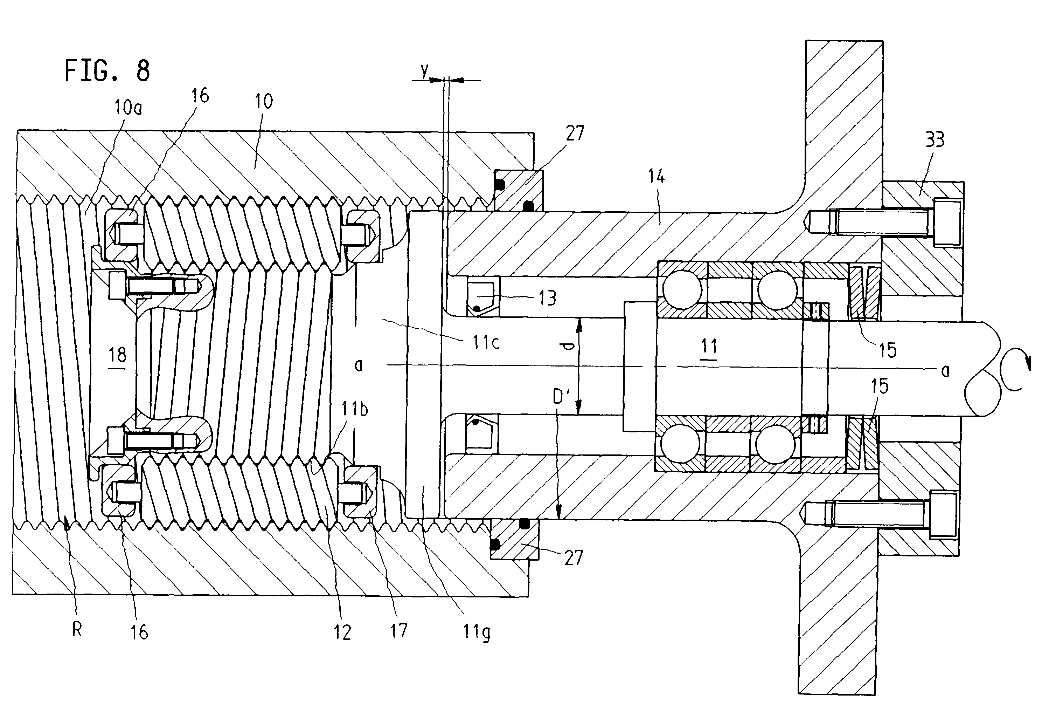

Bei der Bewegung wird unter der Wirkung elastischer Mittel 15 ein Abstand y zwischen der Lagerscheibe 17 und dem rohrförmigen Element 14 aufrechterhalten. Hierzu sind die elastischen Mittel so bemessen, daß die bei der Bewegung auftretenden Reibungskräfte noch nicht zu einem vollständigen Abbau des Abstandes y führen. Wird jedoch aufgrund eines Widerstandes eine höhere Kraft aufgebracht, so gelangt die Stange 11 über die Lagerscheibe 17 der Rollkörper 12 ggf. auch unmittelbar an dem rohrförmigen Element 14 zur Anlage. Diese Anlage kann gemäß Fig. 8 auch dadurch erfolgen, daß am Hals 11c der Stange ein an das rohrförmige Element 14 hinsichtlich seines Durchmessers angepaßter Bund 11g vorgesehen wird, der nach Verringerung des Abstandes y am rohrförmigen Element wie eine Blockierscheibe anliegt. Die Lagerung der Lagerscheibe 17 ist so vom Blockiervorgang unabhängig. In beiden Fällen ist die Stange 11 und ein dieser zugeordneter Antriebsmotor zumindest hinsichtlich der Rotationskräfte aus dem Kraftfluß ausgekoppelt ist und die Kräfte können über das stabilere rohrförmige Element 14 abgeleitet werden.

Die Stange 11 kann daher auch so bemessen werden, daß sie geeignet ist, im wesentlichen geringe Rotationskräfte während einer Vorwärtsbewegung zu übertragen, während beim Aufbringen größerer Kräfte andere Elemente die Kräfte aufnehmen. Dadurch lassen sich einerseits die Trägheitsmomente der Spindel reduzieren, ebenso sind die zu bewegenden Massen reduziert, und dennoch steht für die eigentliche Kraftübertragung ein geeigeneter Querschnitt zur Verfügung.

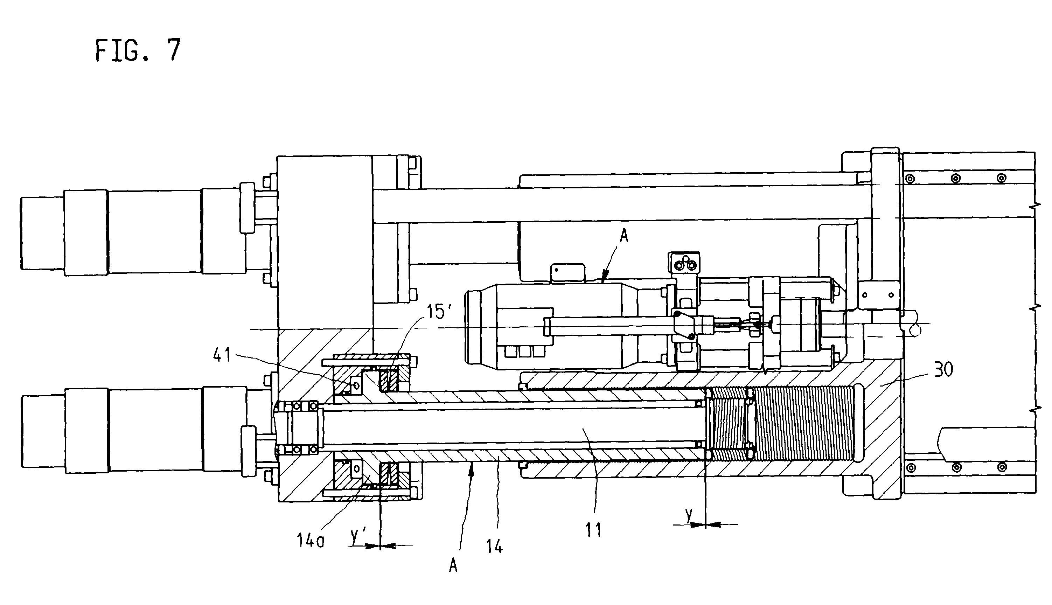

Dies ist z.B. im bevorzugten Verwendungsbereich einer Spritzgießmaschine möglich, wenn durch einen ersten Antrieb die Form geschlossen wird, während die erheblich höhere Zuhaltekraft dann von einem zweiten Antrieb aufgebracht wird. Fig. 7 zeigt beispielhaft einen zweite Antrieb als Kolben-Zylinder-Einheit, der jedoch auch an anderer Stelle innerhalb der dort dargestellten Schließeinheit angeordnet sein kann, wie dies bereits Stand der Technik ist. In Fig. 7 ist der Kolben 14a mit dem rohrförmigen Element 14 verbunden, genauer gesagt einstückig. Das rohrförmige Element 14 ist gegen die Kraft elastischer Rückstellmittel 15' axial bewegbar z.B. durch Zufuhr eiens hydraulischen Mediums in den Zlinderraum 41. Beim Formschluß wird zunächst mit der Vorrichtung die Form geschlossen, bis die Formhälften in Anlage kommen. Sobald die Kraft der elastischen Mittel 15 überschritten ist, ist die Stange 11 aus dem Kraftfluß ausgekoppelt. Jetzt kann die eigentliche Schließkraft, für die nur noch ein geringer Verformungsweg erforderlich ist mittels der kurzhubigen Kolben-Zylinder-Einheit aufgebracht werden. Andererseits kann auch die Beaufschlagung des Zylinderraums 41 unter Verringerung des Abstands y' gleichzeitig den Abstand y verringern, um die Stange 11 auszukoppeln.

In Fig. 1 ist zudem eine Zwangsführung zwischen Kopf 11a und Rollkörpern 12 vorgesehen. Dies erfolgt dadurch, daß der Kopf 11a oder die Scheibe 18 eine Verzahnung 18e aufweist, die mit einer Verzahnung 12c des Rollkörpers 12 kämmt. Die Befestigung erfolgt über ein zentrales Befestigungsmittel 24, mit dem die Führung für die Lagerscheibe 16 am Kopf 11a der Stange 11 befestigt wird. Eine Zwangsführung gegenüber dem Innengewinde 10a des Rohres 10 ist dadurch nicht verwirklicht.

Im dritten Ausführungsbeispiel der Fig. 3 besitzen die Rollkörper 12 unterschiedliche Profilierungen 12a, 12b mit unterschiedlichen Durchmessern. Die Profilierung 12a mit größerem Aussendurchmesser rollt auf der Innenprofilierung 10a des Rohres 10 ab. Die Profilierung 12b kleineren Durchmessers rollt auf Rippen 11f der Außenprofilierung des Kopfes 11a der Stange 11 ab. Hierdurch läßt sich eine weitere Übersetzung der Drehzahl ermöglichen. Die Profilierungen 12a, 12b der Rollkörper 12 sind miteinander überlappend ausgebildet in einander abwechselnden Abschnitten vorgesehen. Lediglich die Innenprofilierung 10a des Rohres besitzt eine Steigung und ist mehrgängig ausgebildet, so daß mehrere identische Planeten als Rollkörper 12 vorgesehen sind.

Gemäß Fig. 4 können statt der Rollkörper auch Kugeln 19 vorgesehen werden. Innenprofilierung 10a und Außenprofilierung 11a sind dann Rollbahnen für die Kugeln 19. Die Kugeln sind an einem Kugelkäfig 20 geführt, der durch eine im Kugelkopf liegende Bohrung 28 einen Umlauf der Kugeln sichert.

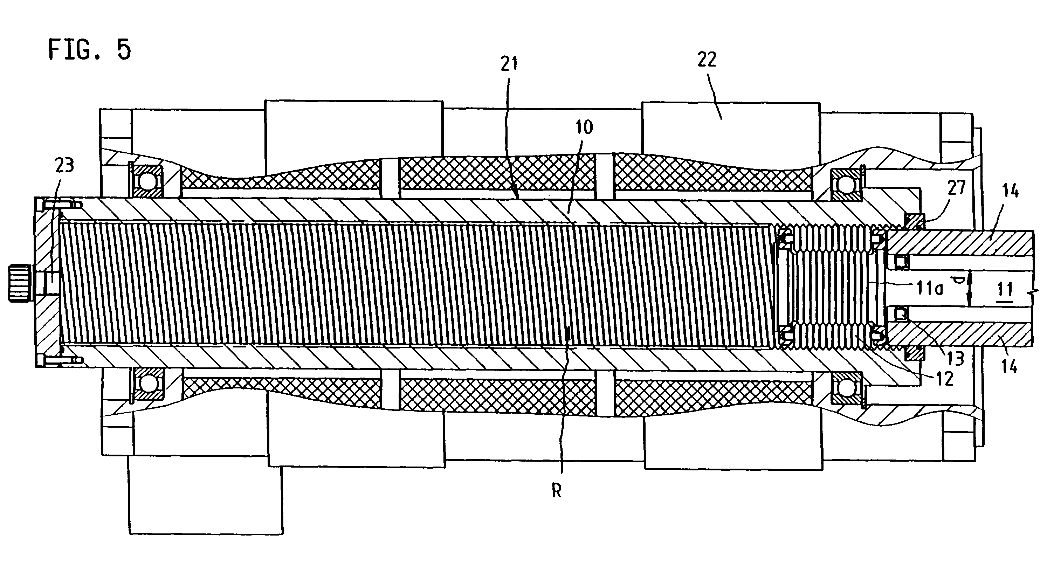

Gemäß Fig. 5 kann das Rohr 10 auch der Rotor 21 oder der Teil eines Rotors eines Hohlwellenmotors 22 sein. Bei Betätigung taucht die Stange 11 in den Hohlwellenmotor ein, wobei auch hier die Länge des Rohrs 10 den maximalen Hub der Einheit bestimmt. Da das Rohr auch durchaus länger als der Motor sein kann, muß hier nicht die Länge des Motors den maximalen Hub bestimmen.

## Patentansprüche

1. Vorrichtung zur Umwandlung einer Drehbewegung in eine Axialbewegung mit
- einem außen liegenden Rohr (10) mit Innenprofilierung (10a),
- einer innen liegenden Stange (11) mit Kopf (11a) mit Außenprofilierung (11b),
- einem zwischen Rohr (10) und Stange (11) gebildeten Innenraum (R),
- mehreren im Innenraum (R) und um den Kopf (11a) herum angeordneten Rollkörpern (12), die mit wenigstens einer Profilierung (12a, 12b) mit der Innenprofilierung (10a) des Rohrs (10) und der Außenprofilierung (11b) des Kopfs (11a) in Wirkverbindung stehen, der gegenüber den Rollkörpern (12) im wesentlichen rotatorisch lageveränderbar ist, wobei der Kopf (11a) gegenüber den Rollkörpern (12) axial unverschieblich ist und die Rollkörper (12) gegenüber dem Rohr (10) axial verschieblich sind,
dadurch gekennzeichnet, daß die Stange (11) von einem zur Mittelachse (a-a) der Stange (11) koaxialen, rohrförmigen Element (14) umgeben ist, das sich bei Betätigung der Vorrichtung translatorisch gegenüber dem Rohr (10) bewegt und daß bei Überschreiten einer vorbestimmten Axialkraft das außen liegende Rohr (10) unter Überwindung der Kraft elastischer Mittel mit dem rohrförmigen Element (14) zur Kraftübertragung in Wirkverbindung tritt.

2. Vorrichtung nach Anspruch 1, dadurch gekennzeichnet, daß das rohrförmige Element (14) am Rohr (10) bei der Axialbewegung dichtend anliegt und sich unabhängig von der Rotation der Stange bewegt.

3. Vorrichtung nach Anspruch 1, dadurch gekennzeichnet, daß die Stange (11) gegen die Kraft der elastischen Mittel (15, 15') begrenzt axial verschieblich gelagert ist und an dem rohrförmigen Element (14) in Anlage kommt.

4. Vorrichtung nach Anspruch 3, dadurch gekennzeichnet, daß die Stange (11) bei Überschreiten der vorbestimmten Axialkraft über die Lagerscheibe (17) der Rollkörper (12) an dem rohrförmigen Element (14) in Anlage kommt.

5. Vorrichtung nach Anspruch 3, dadurch gekennzeichnet, daß die Stange (11) bei Überschreiten der vorbestimmten Axialkraft mit einem Bund (11g in Fig. 7) an dem rohrförmigen Element (14) in Anlage kommt.

6. Vorrichtung nach Anspruch 3, dadurch gekennzeichnet, daß die Axialkraft durch einen zweiten die Vorrichtung beaufschlagenden Antrieb aufgebracht wird.

7. Vorrichtung nach Anspruch 6, dadurch gekennzeichnet, daß der zweite Antrieb eine Kolben-Zylinder-Einheit ist, deren Kolben (14a) mit dem rohrförmigen Element (14) verbunden ist.

8. Vorrichtung nach Anspruch 1, dadurch gekennzeichnet, daß die Rollkörper (12) Kugeln (19) sind, die in einem Kugelkäfig (20) geführt sind.

9. Vorrichtung nach Anspruch 1, dadurch gekennzeichnet, daß das Rohr (10) zumindest teilweise der Rotor (21) oder der Teil eines Rotors eines Hohlwellenmotors (22) ist, in den die Stange (11) eintaucht.

## Claims

1. Apparatus for converting a rotational motion into an axial motion, including
- an externally situated tube (10) with internal profiling (10a),
- an internally situated rod (11) having a head (11a) with external profiling (11b),
- an inner chamber (R) formed between tube (10) and rod (11),
- a plurality of rolling bodies (12) which are disposed in the inner chamber (R) and around the head (11a) and are in operative connection, by means of at least one profiling (12a, 12b), with the internal profiling (10a) of the tube (10) and the external profiling (11b) of the head (11a), the position of which head is adjustable, substantially rotationally, relative to the rolling bodies (12), the head (11a) being axially non-displaceable relative to the rolling bodies (12), and the rolling bodies (12) being axially displaceable relative to the tube (10),
characterised in that the rod (11) is surrounded by a tubular element (14), which is coaxial relative to the central axis (a-a) of the rod (11), and moves in a translatory manner relative to the tube (10) when the apparatus is actuated, and in that, when a predetermined axial force is exceeded, the externally situated tube (10) becomes operatively connected to the tubular element (14), for the purpose of force transmission, by overcoming the force of resilient means.

2. Apparatus according to claim 1, characterised in that the tubular element (14) abuts against the tube (10) in a sealing manner during the axial motion and moves independently of the rotation of the rod.

3. Apparatus according to claim 1, characterised in that the rod (11) is mounted so as to be axially displaceable to a limited extent in opposition to the force of the resilient means (15, 15') and comes to abut against the tubular element (14).

4. Apparatus according to claim 3, characterised in that the rod (11) comes to abut against the tubular element (14), via the bearing disc (17) of the rolling bodies (12), when the predetermined axial force is exceeded.

5. Apparatus according to claim 3, characterised in that the rod (11) comes to abut against the tubular element (14), by means of a collar (11g in Fig. 7), when the predetermined axial force is exceeded.

6. Apparatus according to claim 3, characterised in that the axial force is applied by a second drive, which acts on the apparatus.

7. Apparatus according to claim 6, characterised in that the second drive is a piston-and-cylinder unit, the piston (14a) of which is connected to the tubular element (14).

8. Apparatus according to claim 1, characterised in that the rolling bodies (12) are balls (19), which are guided in a ball race (20).

9. Apparatus according to claim 1, characterised in that the tube (10) is, at least partially, the rotor (21) or the part of a rotor of a hollow shaft motor (22), into which the rod (11) extends.

## Revendications

1. Dispositif destiné à transformer un mouvement de rotation en un mouvement axial, comportant
- un tube (10) situé à l'extérieur avec profilage intérieur (10a),
- une tige (11) située à l'intérieur avec tête (11a) et profilage extérieur (11b),
- un volume intérieur (R) formé entre en le tube (10) et la tige (11),
- plusieurs corps de roulement (12), disposés dans le volume intérieur (R) et autour de la tête (11a), qui sont en liaison active, par au moins un profilage (12a,12b), avec le profilage intérieur (10a) du tube (10) et avec le profilage extérieur (11b) de la tête (11a), dont la position peut varier sensiblement par rotation par rapport aux corps de roulement (12), la tête (11a) ne pouvant coulisser axialement par rapport aux corps de roulement (12) et les corps de roulement (12) pouvant coulisser axialement par rapport au tube (10),
caractérisé en ce que la tige (11) est entourée par un élément tubulaire (14) qui est coaxial à l'axe médian (a-a) de la tige (11) et se déplace en translation par rapport au tube (10), par actionnement du dispositif, et en ce que dans le cas où est dépassée une force axiale prédéterminée, le tube (10) situé à l'extérieur vient en liaison active avec l'élément tubulaire (14) pour la transmission des forces, en surmontant la force de moyens élastiques.

2. Dispositif selon la revendication 1, caractérisé en ce que l'élément tubulaire (14) s'applique de manière étanche contre le tube (10) lors du mouvement axial et se déplace indépendamment de la rotation de la tige.

3. Dispositif selon la revendication 1, caractérisé en ce que la tige (11) est montée de manière à pouvoir coulisser axialement, dans une mesure limitée, à l'encontre de la force des moyens élastiques (15,15'), et vient s'appliquer contre l'élément tubulaire (14).

4. Dispositif selon la revendication 3, caractérisé en ce que lorsque la force axiale prédéterminée est dépassée, la tige (11) vient s'appliquer contre l'élément tubulaire (14) par l'intermédiaire du disque de palier (17) des corps de roulement (12).

5. Dispositif selon la revendication 3, caractérisé en ce que lorsque la force axiale prédéterminée est dépassée, la tige (11) vient s'appliquer, par un épaulement (11g sur la fig. 7) contre l'élément tubulaire (14).

6. Dispositif selon la revendication 3, caractérisé en ce que la force axiale est appliquée par un deuxième dispositif d'entraînement, qui agit sur le dispositif.

7. Dispositif selon la revendication 6, caractérisé en ce que le deuxième dispositif d'entraînement est une unité à cylindre et piston dont le piston (14a) est relié à l'élément tubulaire (14).

8. Dispositif selon la revendication 1, caractérisé en ce que les corps de roulement (12) sont des billes (19) qui sont guidées dans une cage à billes (20).

9. Dispositif selon la revendication 1, caractérisé en ce que le tube (10) est au moins en partie le rotor (21) ou la partie d'un rotor d'un moteur à arbre creux (22), dans lequel pénètre la tige (11).
